# EUROPEAN PATENT APPLICATION

(11) **EP 2 128 944 A1**
(43) Date of publication of application: **02.12.2009**
(21) Application number: 08167625.6
(22) Date of filing: 27.10.2008
(51) Int. Cl.: H02B 13/02

(54) **A method of producing an encapsulated electric apparatus and such an encapsulated electric apparatus**

(71) Applicant: ABB Technology AG, 8050 Zürich (CH)
(72) Inventor: Espeseth, Robert, 3714, Skien (NO); Granhaug, Ole, 3723, Skien (NO)
(74) Representative: Kock, Ina

(57) **Abstract**

An encapsulated electric power distribution apparatus (1), comprising an encapsulation that encloses said electric power apparatus (1) and that comprises at least two wall elements (2a, 2b, 2c, 2d, 2e). The apparatus (1) comprises a joint by means of which the wall elements (2a, 2b, 2c, 2d, 2e) are joined, said joint comprising a cured resin.

## Description

### TECHNICAL FIELD

The present invention relates to a method of producing an encapsulated electric power distribution apparatus, wherein at least two wall elements are positioned such that they enclose said apparatus, wherein said wall elements are joined to each other, thereby forming an encapsulation.

The invention also relates to an encapsulated electric power distribution apparatus, comprising an encapsulation that encloses said electric power apparatus and that comprises at least two adjoined wall elements.

Typically, but not necessarily, the electric power distribution apparatus is arranged so as to carry medium or high voltage during operational conditions, wherein medium and high voltage is referred to as 1 kV or above. Typically, the electric power distribution apparatus is an electric switchgear, preferably a so-called gas-insulated switchgear in which an electrically insulating gas is provided. Such a gas may be of other pressure and/or other composition than the surrounding atmosphere.

### BACKGROUND OF THE INVENTION

Gas-insulated switchgears of prior art comprise a plurality of components gas-sealingly housed in a metal housing. The metal housing comprises two or more, typically six, wall elements that are joined to each other and sealed in order to permit a continuous and reliable retention of a pressurised electrically insulating gas, such as SF6, inside the housing. The wall elements are, normally, formed by metal sheets that are joined to each other by means of welding or soldering along a joint in order to achieve the required sealing thereof. Accordingly, a rather large amount of welding work will be required during the production of the housing. Since a perfect sealing is required, only spot welding cannot be applied, and the welding or soldering operations become both time-consuming and, therefore, rather expensive.

### THE OBJECT OF THE INVENTION

It is an object of the present invention to present a method of producing an encapsulated electric power distribution apparatus as initially defined, said method being more cost-efficient than methods of prior art.

### SUMMARY OF THE INVENTION

The object of the present invention is achieved by means of the initially defined method, **characterised in that** a resin is applied to least one of said wall elements and that said wall elements are joined by way of curing of said resin along a joint between said wall elements. The cured resin will form a bonding that holds the wall elements in position in relation to each other. Preferably, the resin is a thermosetting resin. As a conceivable alternative, however, thermoplastic resins may be used.

According to a preferred embodiment the applied resin is heated during curing thereof. Thereby, the curing process will be accelerated, as well as the whole joining process.

It is preferred that at least one of said wall elements comprises a metal, and is preferably formed by a metal sheet. Thereby, the gas impermeability and mechanical strength of the encapsulation is assured or improved. Preferably both, or all, wall elements to be joined comprise a metal, and are, preferably, formed by metal sheets. Alternative wall materials may include polymers or composite materials.

According to one embodiment at least one of said wall elements comprises a metal, wherein said wall element is heated in the region of said joint before or during curing of said resin. Metals in general have a high thermal conductivity. In many cases it might be preferable to heat the resin indirectly through a primary heating of a wall element with which the resin is in thermal, and preferably direct physical, contact, instead of directly heating the resin by means of any heat-generating means. Especially if a wall element is made of metal, heating of that wall element may be a preferred way of applying heat to the resin to be cured.

According to one embodiment of the present invention said at least one wall element is heated by means of induction heating. Thereby, local heat treating in the region of the joint becomes facilitated, and is also preferred. Induction heating is suggested as a preferred method of indirectly conferring heat to a resin for decreasing the curing-time of the latter, i.e. for the realization of a so-called induction bonding of said resin. Induction heating has many advantages in heat-treating applications over methods that involve heating devices such as furnaces and ovens. Induction heating delivers rapid heat from within the metallic part versus the slow heat delivered from the outside of the part inward, via radiation and convectional heat transfer in alternative heating methods such as ovens and furnaces. The higher speeds of induction heating may, therefore, lead to higher productivity.

According to a further embodiment, said resin is applied continuously along said joint, thereby forming a continuous sealing between said wall elements when cured. Thereby, a precondition for a secure provision of an electrically insulating and/or pressurised gas or gas mixture inside the encapsulation is provided for. Preferably, all joints between the wall elements of the encapsulation are provided with a continuous string of said resin, thereby conferring a gas-sealing property to the encapsulation. According to the invention the resin may be the only carrier of mechanical load between said wall elements. However, the wall elements may be provided with further means for adopting mechanical load between individual wall elements, such as snap connections, spot welds or the like that might adopt a minor or major part of the mechanical loads, while the cured resin may guarantee the gas-sealing functionality along the joint and also be able of adopting at least a minor part of the mechanical loads acting thereon.

According to one embodiment, an interior of said encapsulation is filled with a gas mixture of higher pressure than that of the surrounding atmosphere. The invention is particularly advantageous in production process in which such a step is included. It should, however, also be mentioned that, if for example said gas mixture is different from the gas mixture of the surrounding environment, the invention might be advantageous even in those cases when such a gas does not have an elevated pressure inside said encapsulation. Accordingly, the invention may also be applied to a process in which the encapsulation is filled with a gas mixture of equal or lower pressure but different composition than the gas mixture of the surrounding atmosphere.

According to one embodiment, said electric power distribution apparatus is an electric switchgear. Typically, a switchgear will comprise a plurality of compartments, each carrying three bushings (one for each phase in three-phase system) to be connected to three exterior power cables outside the switchgear, a breaker for each phase inside said compartment, an electric conductor that extends from the bushing of each phase to a first end of a breaker, and a switch knife (one for each phase, used for connecting or disconnecting a second end of said breaker to/from an electric connector formed by a so-called bus-bar (one for each phase) that extends through the compartments. One or more of the compartments, preferably every one, is filled with a pressurised, electrically conducting gas. The encapsulation according to the invention may form an enclosure that defines an individual such compartment or may form a commune enclosure for all the compartments of such a switchgear.

The object of the invention is also achieved by means of the initially defined encapsulated electric power distribution apparatus, **characterised in that** that it comprises a joint by means of which the wall elements are joined, said joint comprising a cured resin. The advantages of such a design from a cost-efficiency point of view with regard to the production thereof have already been presented. Moreover, such a design will enable the use of wall elements the material or surfaces of which is/are not easily welded.

As previously stated, it is preferred that said cured resin extends continuously along said joint, thereby forming a sealed joint between said wall elements, and that an interior of said encapsulation houses a gas that has a higher pressure than that of the surrounding environment.

An example of an encapsulated electric power distribution apparatus onto which the teaching of the invention is to be applied will be further presented in the following detailed description.

### BRIEF DESCRIPTION OF THE DRAWING

Fig. 1 is a side view showing a part of the interior of an encapsulated electric power distribution apparatus provided with an encapsulation assembled in accordance with the invention,
Fig. 2 is a detailed view of a joint according to the invention, and
Fig. 3 is a detailed view of an alternative embodiment of a joint according to the invention.

### DETAILED DESCRIPTION OF THE INVENTION

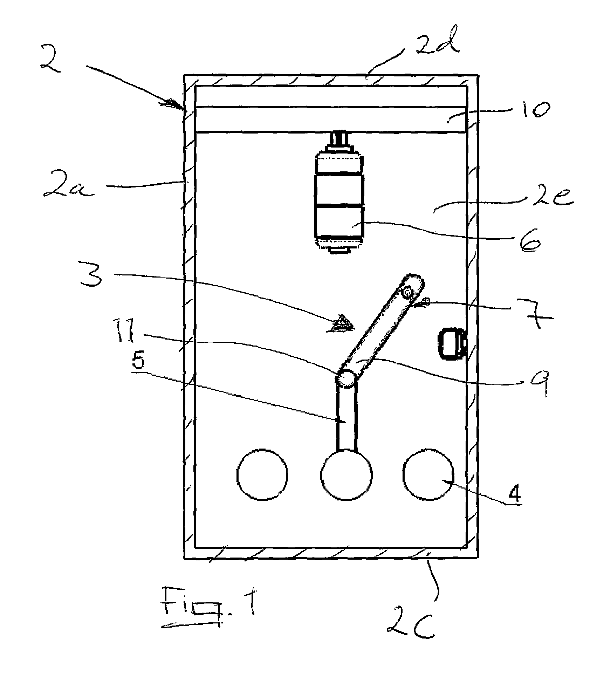

Fig. 1 shows an electric power distribution switchgear 1 that forms an encapsulated electric power distribution apparatus according to the invention. The switchgear 1 comprises a metal encapsulation 2 inside which a number of switching devices 3, only one of which is shown in the figure, are housed. The switching devices not shown in the figure are arranged in parallel with the one shown and are thus either hidden behind the one shown or located in planes in front of the latter and not shown in the figure. A wall of the encapsulation 2 is penetrated by a number of bushings 4, one for each phase of a plural phase system. From each bushing 4 a respective conductor 5, only one of which is shown in the figure, extends to a respective switching device 3. On the outside of the encapsulation 2 the bushings 4 are connected to cables, not shown, that either connect the switchgear 1 to a load or to a medium or high voltage power distribution line.

Each switching device 3 according to the invention comprises a breaker 6 connected in one end to a busbar 10 that extends through the switchgear and in another end to a switch 7. The breaker 6 is a vacuum interrupter that, though not shown in the drawing but as known per se, has a fixed part and a moveable part, wherein the fixed part is connected to the switch 7 and the moveable part is connected to the busbar 10. The switch 7 is a so called safety switch or selector switch which is adapted to break a medium or high voltage circuit to disconnect the breaker 6 from a medium or high voltage line after breaking has been performed by means of the breaker. The switch 7 comprises a switch element 9 movable by pivotation between three positions, i.e. connected to the breaker, or connected to earth, or an open position in which the switch element is neither connected to the breaker nor to the earth. The reasons to why these positions are used during operation of the switchgear are well known to persons skilled in the art and will, therefore, not be further described here.

It should be understood that a switchgear may comprise a plurality of switchgears, or units, such as the one described above. For each electric phase there is a common bus bar, like the conductor 10 defined above, that extends from unit to unit. The encapsulation may or may not be common for the plurality of switchgears/units. The encapsulation may be filled with an electrically insulating gas, which, preferably, is pressurised. Air-filled encapsulations are also conceived, pressurised or at atmospheric pressure.

The switching device comprises a shaft 11 onto which the switch element 9 is attached. The shaft 11 is common for the parallel three switches 7 of the three-phase switchgear described so far. The shaft 11 extends through a wall of the encapsulation 2 and is manoeuvrable from outside the encapsulation 2. The bus bar 10 extends horizontally in an upper part of the compartment defined by the encapsulation 2, and there is provided a grounded element 12 on an inner wall of the encapsulation 2, below the level of the bus bar.

The encapsulation 2 comprises a plurality of wall elements (2a, 2b, 2c, 2d, 2e) that joined by application of a resin to least one of said wall elements (2a, 2b, 2c, 2d, 2e) and by way of curing of said resin along a joint between said wall elements (2a, 2b, 2c, 2d, 2e). The applied resin is heated during curing thereof. The wall elements (2a, 2b, 2c, 2d, 2e) comprise a metal and they are heated in the region of said joint before or during curing of said resin. Each wall element is heated by means of induction heating. The cured resin contributes to a gas-tight sealing of the encapsulation, such that a pressurized gas may be housed therein during considerable. The resin also has the function of holding the wall elements (2a, 2b, 2c, 2d, 2e) together, but may, in that respect, be supplemented by other elements, such as snap joints or the like provided on the respective wall elements (2a, 2b, 2c, 2d, 2e). It should be mentioned that, in fig. 1, all wall elements except a front wall element generally corresponding to the rear wall element 2e are shown.

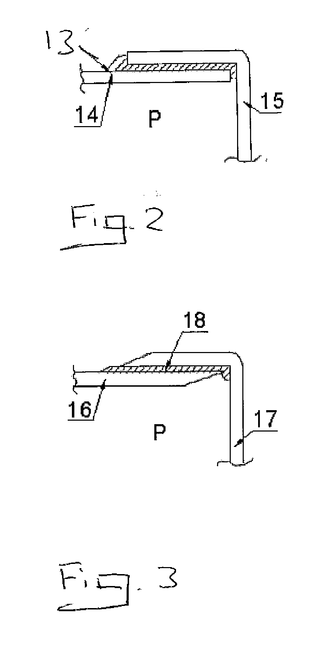

Fig. 2 shows a first embodiment of a joint according to the invention. The joint is formed by a cured resin layer 13 provided between a first wall element 14 and a second wall element 15, overlapping the first wall element 14. The resin layer 13 has a generally constant thickness between the two wall elements 14, 15. It extends beyond the end of the respective wall element 14, 15 in the joint region.

Fig. 3 shows an alternative embodiment of a joint according to the invention, which differs from the embodiment of fig. 2 in that the end of the respective wall element 16, 17 is chamfered or bevelled to a wedge shape. Thereby, if there is an inner pressure acting on the encapsulation formed by said wall elements 16, 17, an improved distribution of the load on the joint, i.e. the resin layer 18.

## Claims

1. A method of producing an encapsulated electric power distribution apparatus (1), wherein at least two wall elements (2a, 2b, 2c, 2d, 2e) are positioned such that they enclose said apparatus (1), wherein said wall elements (2a, 2b, 2c, 2d, 2e) are joined to each other, thereby forming an encapsulation, **characterised in that** a resin is applied to least one of said wall elements (2a, 2b, 2c, 2d, 2e) and that said wall elements (2a, 2b, 2c, 2d, 2e) are joined by way of curing of said resin along a joint between said wall elements (2a, 2b, 2c, 2d, 2e).

2. A method according to claim 1, **characterised in that** the applied resin is heated during curing thereof.

3. A method according to claim 1 or 2, **characterised in that** at least one of said wall elements (2a, 2b, 2c, 2d, 2e) comprises a metal and that said wall element (2a, 2b, 2c, 2d, 2e) is heated in the region of said joint before or during curing of said resin.

4. A method according to claim 3, **characterised in that** said at least one wall element (2a, 2b, 2c, 2d, 2e) is heated by means of induction heating.

5. A method according to claim 3 or 4, **characterised in that** said wall element (2a, 2b, 2c, 2d, 2e) is locally heated in the region of said joint.

6. A method according to any one of claims 1-5, **characterised in that** said resin is applied continuously along said joint, thereby forming a continuous sealing between said wall elements (2a, 2b, 2c, 2d, 2e) when cured.

7. A method according to any one of claims 1-6, **characterised in that** an interior of said encapsulation is filled with a gas mixture of higher pressure than that of the surrounding atmosphere.

8. A method according to any one of claims 1-7, **characterised in that** said electric power distribution apparatus (1) is an electric switchgear.

9. An encapsulated electric power distribution apparatus (1), comprising an encapsulation that encloses said electric power apparatus (1) and that comprises at least two wall elements (2a, 2b, 2c, 2d, 2e), **characterised in that** it comprises a joint by means of which the wall elements (2a, 2b, 2c, 2d, 2e) are joined, said joint comprising a cured resin.

10. An encapsulated electric power distribution apparatus (1) according to claim 9, **characterised in that** said cured resin extends continuously along said joint, thereby forming a sealed joint between said wall elements (2a, 2b, 2c, 2d, 2e).

11. An encapsulated electric power distribution apparatus (1) according to claim 9 or 10, **characterised in that** an interior of said encapsulation houses a gas that has a higher pressure than that of the surrounding environment.

12. An encapsulated electric power distribution apparatus (1) according to any one of claims 9-11, **characterised in that** at least one of said wall elements (16, 17) presents a chamfered end in a region of said joint.

13. An encapsulated electric power distribution apparatus (1) according to any one of claims 9-12, **characterised in that** said apparatus (1) is an electric switchgear.

14. An encapsulated electric power distribution apparatus (1) according to any one of claims 9-13, **characterised in that,** during operation, said apparatus (1) carries a voltage equal to or above 1 kV.

15. An encapsulated electric power distribution apparatus (1) according to any one of claims 9-14, **characterised in that** at least one of said wall elements comprises a metal.
